(19) Europäisches Patentamt
European Patent Office
Office européen des brevets

(11) **EP 4 718 288 A1**

(12) **EUROPEAN PATENT APPLICATION**
published in accordance with Art. 153(4) EPC

(43) Date of publication:
**01.04.2026 Bulletin 2026/14**

(21) Application number: **24829899.4**

(22) Date of filing: **29.02.2024**

(51) International Patent Classification (IPC):
*G06F 17/12* (2006.01)

(52) Cooperative Patent Classification (CPC):
**G06F 17/12**

(86) International application number:
**PCT/CN2024/079225**

(87) International publication number:
**WO 2025/001243 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **25.06.2023 CN 202310752934
26.09.2023 CN 202311253313**

(71) Applicant: **Huawei Cloud Computing
Technologies Co., Ltd.
Guiyang, Guizhou, 550025 (CN)**

(72) Inventors:
• **GUO, Jinhao**
  **Guiyang, Guizhou 550025 (CN)**
• **XIAO, Fan**
  **Guiyang, Guizhou 550025 (CN)**
• **YAN, Wengang**
  **Guiyang, Guizhou 550025 (CN)**
• **WU, Xiaofei**
  **Guiyang, Guizhou 550025 (CN)**
• **YE, Yusi**
  **Guiyang, Guizhou 550025 (CN)**

(74) Representative: **Goddar, Heinz J. et al
Boehmert & Boehmert
Anwaltspartnerschaft mbB
Pettenkoferstrasse 22
80336 München (DE)**

(54) **METHOD FOR SOLVING LINEAR EQUATIONS AND RELATED DEVICE**

(57) Embodiments of this application disclose a method for solving a system of linear equations. In the method, a computing device or a computing device cluster may obtain description information input by a user, where the description information includes information about a system of linear equations, and the information about the system of linear equations includes a right-hand side; next perform inference on the description information by using an artificial intelligence AI model, to obtain a first initial solution corresponding to the system of linear equations; and then determine a target initial solution based on the first initial solution, and iteratively solve the system of linear equations based on the target initial solution, to output a solving result of the system of linear equations. In the method, the AI model can identify features of the system of linear equations based on the input description information, to efficiently determine the appropriate first initial solution of the system of linear equations, to determine the target initial solution based on the first initial solution, and efficiently and accurately iteratively solve the system of linear equations based on the target initial solution, thereby improving solving efficiency of the system of linear equations.

EP 4 718 288 A1

User

Configuration Information | Simulation result

Cloud management platform

CAE simulation service

Numerical calculation request | Calculation result

Numerical calculation solver service

... | Linear iteration method | ...

Description information | Calculation result

Initial solution generation service of a system of linear equations

Description information

Initial solution adaptive optimization module

Target initial solution

First initial solution

Initial solution generation module

Inference request | First initial solution

AI model service

Target initial solution

Solving result

Linear iterative solver service

Target initial solution | Calculation result

Numerical calculation platform

Calculation request | Calculation result

High-performance computing base

FIG. 7

## Description

This application claims priorities to Chinese Patent Application No. CN202310752934.X, filed with the China National Intellectual Property Administration on June 25, 2023 and entitled "MATHEMATICAL MODEL SOLVING METHOD AND APPARATUS", and to Chinese Patent Application No. CN202311253313.3, filed with the China National Intellectual Property Administration on September 26, 2023 and entitled "METHOD FOR SOLVING SYSTEM OF LINEAR EQUATIONS AND RELATED DEVICE", both of which are incorporated herein by reference in their entireties.

## TECHNICAL FIELD

This application relates to the field of artificial intelligence (artificial intelligence, AI) technologies, and specifically, to a method for solving a system of linear equations and a related device.

## BACKGROUND

In fields such as industrial simulation, computer-aided engineering (computer-aided engineering, CAE) simulation in engineering design is often used to analyze physical performance of engineering and products.

When the CAE simulation is used to solve a specific physical problem, solving a system of linear equations is usually an important and time-consuming task.

A frequently-used method for solving a system of linear equations is a linear iteration method. The linear iteration method is to obtain an approximate solution of the system of linear equations through a finite quantity of iterations.

When the system of linear equations is solved by using the linear iteration method, impact of an initial solution on an iterative solving process is significant. If the initial solution is far from a real solution, more iterations need to be performed to obtain the real solution through convergence. Consequently, calculation time is prolonged. In addition, if the initial solution is inappropriate, the iteration may further fail to converge.

Currently, the initial solution suitable for the current to-be-solved system of linear equations is usually determined based on expert experience, or a default initial solution is used.

However, because a scale and a property of the system of linear equations change greatly, it is usually difficult for the default initial solution to produce a good effect in a solving process of the system of linear equations. However, the expert experience usually needs to be accumulated for a long period of time, and participation of related experts is needed in the solving process, affecting processing efficiency. Therefore, a method that can be used for efficiently generating an appropriate initial solution of the to-be-solved system of linear equations is urgently needed, to better calculate a solving result of the system of linear equations.

## SUMMARY

Embodiments of this application provide a method for solving a system of linear equations, to conveniently and efficiently generate an appropriate initial solution of a to-be-solved system of linear equations. This application further provides a corresponding apparatus, a computing device, a computing device cluster, a computer-readable storage medium, a computer program product, and the like.

A first aspect of this application provides a method for solving a system of linear equations, applied to a computing device or a computing device cluster. In the method, description information input by a user may be obtained, where the description information includes information about a system of linear equations, and the information about the system of linear equations includes a right-hand side. Inference is performed on the description information by using an artificial intelligence AI model, to obtain a first initial solution corresponding to the system of linear equations. A target initial solution is determined based on the first initial solution, and the system of linear equations is iteratively solved based on the target initial solution, to output a solving result of the system of linear equations.

In the first aspect, the AI model can identify features of the system of linear equations based on the input description information, to efficiently determine the appropriate first initial solution of the system of linear equations, to determine the target initial solution based on the first initial solution, and efficiently and accurately iteratively solve the system of linear equations based on the target initial solution, thereby improving solving efficiency of the system of linear equations, and avoiding a generalization problem caused by an initial solution determined based on expert experience and a default initial solution.

In a possible implementation of the first aspect, the description information further includes to-be-solved physical problem information, the system of linear equations is obtained by performing numerical simulation on the to-be-solved physical problem information, and the to-be-solved physical problem information includes at least one of the following: a boundary condition, mesh information, and a physical equation.

Currently, conventional algorithms for determining the initial solution of the system of linear equations are usually used to predict the initial solution of the system of linear equations in a mathematical derivation manner, and are, for example, a proper orthogonal decomposition (proper orthogonal decomposition, POD) algorithm and a Fischer (Fischer) algorithm.

Only information such as a coefficient matrix in the system of linear equations is usually considered for these conventional algorithms for determining the initial solution of the system of linear equations, but features of a to-be-solved problem cannot be well reflected based only on the coefficient matrix in the system of linear equations. Therefore, there is usually a large deviation in an effect of the initial solution predicted by using the conventional algorithms for determining the initial solution of the system of linear equations, and appropriate initial solutions cannot be provided for various scenarios.

In this possible implementation, considering that the system of linear equations is constructed based on the physical problem information. In other words, the physical problem information affects a subsequently generated system of linear equations, and the physical problem information used as upper-layer scenario information of the subsequently generated system of linear equations affects parameters such as the coefficient matrix and/or the right-hand side in the subsequently generated system of linear equations.

It can be learned that, the physical problem information is closely related to the constructed system of linear equations when being used as the upper-layer scenario information used to construct the system of linear equations. Therefore, in this possible implementation, the description information may include the information about the system of linear equations and the physical problem information associated with the system of linear equations. Then, the AI model may be used to fully mine a plurality of aspects of information such as the information about the system of linear equations and the physical problem information associated with the system of linear equations, to determine the first initial solution that meets the features of the current physical problem and that is suitable for the current to-be-solved system of linear equations. It can be learned that, by using the method, appropriate initial solutions can be efficiently provided for systems of linear equations corresponding to various physical problems in different scenarios, thereby improving solving efficiency of the corresponding systems of linear equations.

In a possible implementation of the first aspect, determining the target initial solution based on the first initial solution, and iteratively solving the system of linear equations based on the target initial solution, to output the solving result of the system of linear equations include: obtaining first configuration information, where the first configuration information carries at least one initial solution generation manner used to generate an initial solution; obtain a plurality of initial solutions in the at least one initial solution generation manner indicated by the first configuration information, where the plurality of initial solutions include the first initial solution; selecting the target initial solution from the plurality of initial solutions; and iteratively solving the system of linear equations based on the target initial solution, to output the solving result of the system of linear equations.

In this possible implementation, considering that different initial solution generation manners may be suitable for physical problems in different physical scenarios, the plurality of initial solutions may be provided based on the first configuration information. In this way, adaptation degrees of different initial solution generation manners in different physical problems may be fully considered, and a more appropriate target initial solution in the physical problem of a current category is selected from the plurality of initial solutions, so that quality of the finally obtained target initial solution is improved, thereby improving solving efficiency of an iterative solving process of the system of linear equations.

In a possible implementation of the first aspect, selecting the target initial solution from the plurality of initial solutions includes: obtaining second configuration information, where the second configuration information carries at least one heuristic policy; and selecting the target initial solution from the plurality of initial solutions according to the at least one heuristic policy.

In this possible implementation, the plurality of initial solutions are screened according to the at least one heuristic policy, so that the initial solution that better meets the features of the current physical problem can be selected from the plurality of initial solutions as the target initial solution, so that quality of the finally obtained target initial solution is improved.

In a possible implementation of the first aspect, selecting the target initial solution from the plurality of initial solutions includes: obtaining third configuration information, where the third configuration information carries an evaluation policy, the evaluation policy includes an evaluation indicator, or includes an evaluation indicator and a weight corresponding to each evaluation indicator, and the evaluation indicator includes one or more of solving duration, solving precision, and a quantity of iterations; and selecting the target initial solution from the plurality of initial solutions according to the evaluation policy.

In this possible implementation, any evaluation indicator may be used to evaluate iteration performance when the corresponding initial solution is used as the initial solution in the iterative solving process of the system of linear equations. In this way, the corresponding target initial solution with good iteration performance may be selected from the plurality of initial solutions based on the information such as the evaluation indicator and the related weight in the evaluation policy.

In a possible implementation of the first aspect, the method further includes: generating training data, where the training data includes a training sample and a label corresponding to the training sample, the training sample includes the description information, and the label corresponding to the training sample is obtained based on the first initial solution; and training the AI model based on the training data, to obtain an optimized AI model.

In this possible implementation, the AI model may be continuously iteratively updated with a change of user data distribution and a scale in an actual application scenario for continuous optimization, so that the optimized AI model better adapts to a requirement of the current scenario, and can generate better initial solutions for different physical problems and corresponding systems of linear equations, thereby improving solving efficiency.

In a possible implementation of the first aspect, the method further includes: obtaining a performance indicator corresponding to the solving result, where the performance indicator includes one or more of solving duration, solving precision, and a quantity of iterations; and training the AI model based on the training data, to obtain the optimized AI model includes: training the AI model based on the training data and a loss function, to obtain the optimized AI model, where the loss function is constructed based on the performance indicator.

In a possible implementation of the first aspect, the AI model is a general model or a model used to solve a partial differential equation (partial differential equation, PDE). The general model includes a CNN or a PINN, and the model used to solve the PDE includes DeepONet.

In this possible implementation, the loss function may reflect a performance indicator in a label of a corresponding sample. Specifically, the performance indicator in the label of the corresponding training sample means that corresponding poorer solving performance (for example, longer solving duration, lower solving precision, and a larger quantity of iterations) indicates a corresponding larger loss value. In addition, in some examples, the loss function may be further used to evaluate a difference between a training initial solution output by a to-be-trained model in an iteration process and an initial solution in a label of a corresponding sample.

A second aspect of this application provides a data processing apparatus. The apparatus has a function of implementing the method according to any one of the first aspect or the possible implementations of the first aspect. The function may be implemented by using hardware, or may be implemented by executing corresponding software by hardware. The hardware or software includes one or more modules corresponding to the foregoing function, for example, an obtaining module and a processing module.

A third aspect of this application provides an electronic device. The electronic device includes at least one processor, a storage, and computer-executable instructions that are stored in the storage and that can be run on the processor. When the computer-executable instructions are executed by the processor, the processor performs the method according to any one of the first aspect or the possible implementations of the first aspect.

A fourth aspect of this application provides a computer-readable storage medium storing one or more computer-executable instructions. When the computer-executable instructions are executed by a processor, the processor performs the method according to any one of the first aspect or the possible implementations of the first aspect.

A fifth aspect of this application provides a computer program product storing one or more computer-executable instructions. When the computer-executable instructions are executed by a processor, the processor performs the method according to any one of the first aspect or the possible implementations of the first aspect.

A sixth aspect of this application provides a chip system. The chip system includes a processor, configured to support an electronic device in implementing a function in any one of the first aspect or the possible implementations of the first aspect. In a possible design, the chip system may further include a storage. The storage is configured to store necessary program instructions and data for the electronic device. The chip system may include a chip, or may include a chip and another discrete device.

For technical effects achieved by any one of the second aspect to the sixth aspect or the possible implementations of the second aspect to the sixth aspect, refer to the technical effects achieved by the first aspect or the related possible implementations of the first aspect. Details are not described herein again.

## BRIEF DESCRIPTION OF DRAWINGS

FIG. 1 is a schematic flowchart of an example of CAE simulation according to an embodiment of this application;

FIG. 2 is an example diagram of a data center according to an embodiment of this application;

FIG. 3 is an example diagram of executing a CAE simulation-related task via a cloud management platform according to an embodiment of this application;

FIG. 4 is a diagram of an embodiment of a method for solving a system of linear equations according to an embodiment of this application;

FIG. 5 is an example diagram of iteratively solving a system of linear equations by an initial solution adaptive optimization module according to an embodiment of this application;

FIG. 6 is an example diagram of iteratively solving a system of linear equations according to an embodiment of this application;

FIG. 7 is an example diagram of executing a system of linear equations solving task via a cloud management platform according to an embodiment of this application;

FIG. 8 is an example diagram of a computer model of a solenoid valve according to an embodiment of this application;

FIG. 9 is a diagram of an embodiment of an apparatus for solving a system of linear equations according to an embodiment of this application;

FIG. 10 is a diagram of a structure of a computing device according to an embodiment of this application;

FIG. 11 is a diagram of a structure of a computing device cluster according to an embodiment of this application; and

FIG. 12 is a diagram of a structure of a computing device cluster according to an embodiment of this application.

## DESCRIPTION OF EMBODIMENTS

The following describes embodiments of this application with reference to the accompanying drawings in embodiments of this application. Terms used in implementations of this application are merely used to explain specific embodiments of this application, but are not intended to limit this application.

A person of ordinary skill in the art may learn that, with development of technologies and emergence of a new scenario, technical solutions provided in embodiments of this application are also applicable to a similar technical problem.

In this application, "at least one" means one or more, and "a plurality of" means two or more. "And/or" describes an association relationship between associated objects, and indicates that three relationships may exist. For example, A and/or B may indicate the following three cases: A exists alone, both A and B exist, and B exists alone, where A and B may be singular or plural. The character "/" usually indicates an "or" relationship between the associated objects. "At least one of the following items" or a similar expression thereof means any combination of these items, including any combination of singular items or plural items. In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, and this is merely a discrimination manner that is used when objects having a same attribute are described in embodiments of this application. In addition, the terms "include", "have" and any other variants thereof are intended to cover non-exclusive inclusion, so that a process, method, system, product, or device that includes a series of units is not necessarily limited to those units, but may include other units not expressly listed or inherent to such a process, method, system, product, or device.

CAE simulation refers to a process of analyzing and solving engineering problems through numerical calculation and simulation by using computer-aided engineering technologies. The CAE simulation is an engineering analysis method based on computer technologies, where virtual tests may be performed on a product in a design phase, to evaluate performance, reliability, security, and the like of the product, so that costs and time of actual tests are reduced. The CAE simulation may be applied to various engineering fields, such as machinery, electronics, aerospace, automobiles, and architecture, where various physical phenomena such as structural mechanics, fluid mechanics, and heat conduction can be simulated.

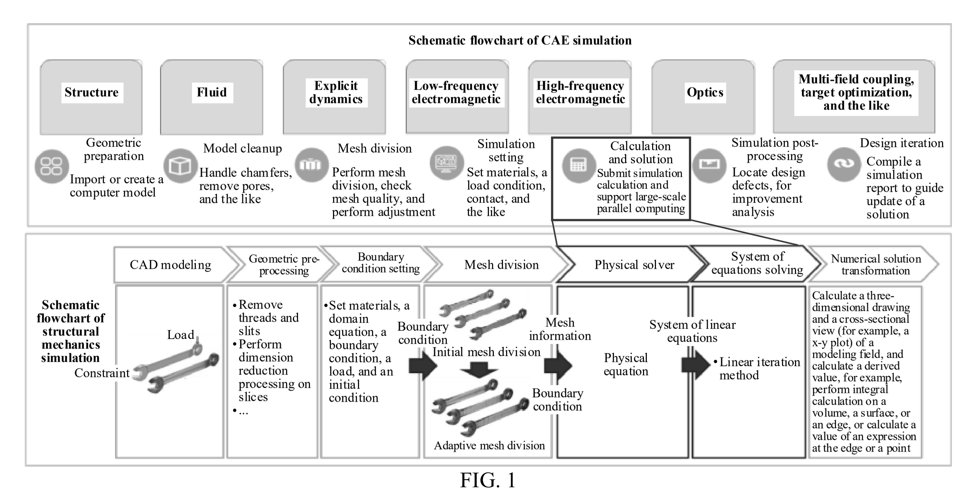

FIG. 1 is a schematic flowchart of an example of CAE simulation.

In a simulation procedure shown in FIG. 1, computer-aided design (computer-aided design, CAD) modeling may be first performed on a physical problem, to obtain a computer model. The computer model may be a digital model obtained in a computer by using specified software, and may virtually describe a physical structure. The computer model may be newly created through CAD, or may be obtained in another manner (for example, from another device) and imported.

Next, geometric pre-processing may be performed on the computer model obtained through modeling. For example, threads and slits in the computer model may be removed, and dimension reduction processing may be performed on slices. Then, one or more of materials, a domain equation, a boundary condition, a load, an initial condition, and the like of the computer model may be set, and mesh division may be then performed on the computer model. After the mesh division is completed, a physical equation may be generated based on the to-be-resolved physical problem, and a system of partial differential equations is obtained through construction, and is further discretized into a system of sparse linear equations.

After the system of linear equations is obtained, the system of linear equations needs to be solved. After a solving result is obtained, the corresponding physical problem may be resolved based on the solving result, to obtain a simulation result. For example, in the example shown in FIG. 1, after the solving result of the system of linear equations is obtained, based on the solving result, a three-dimensional drawing or a cross-sectional view of the computer model may be calculated, and a derived value may be calculated, for example, integral calculation is performed on a volume, a surface, or an edge, or a value of an expression at the edge or a point is calculated.

After the simulation result is obtained, simulation post-processing may be performed. For example, defects of a design solution in engineering may be located based on the simulation result, for improvement analysis. In addition, the design solution may be updated and iterated. For example, a simulation report may be written based on the simulation result, to guide update of the corresponding design solution.

The CAE simulation may be used to solve a plurality of physical problems, for example, problems in terms of structure, fluid, explicit dynamics, low-frequency electromagnetic, optics, multi-field coupling, and target optimization shown in FIG. 1. It can be learned that the CAE simulation is widely applied to various actual engineering application scenarios in the industrial field.

In a CAE simulation process, solving the system of linear equations is usually an important and time-consuming task. Currently, a frequently-used method for solving a system of linear equations is a linear iteration method. The linear iteration method is to obtain an approximate solution of the system of linear equations through a finite quantity of iterations.

When the system of linear equations is solved by using the linear iteration method, currently, an initial solution suitable for the current to-be-solved system of linear equations is usually determined based on expert experience, or a default initial solution is used.

However, because a scale and a property of the system of linear equations change greatly, it is usually difficult for the default initial solution to produce a good effect in a solving process of the system of linear equations. However, the expert experience usually needs to be accumulated for a long period of time, and participation of related experts is needed in the solving process. This affects processing efficiency. Therefore, a method that can be used for efficiently generating an appropriate initial solution of the to-be-solved system of linear equations is urgently needed, to better calculate a solving result of the system of linear equations.

Therefore, embodiments of this application provide a method for solving a system of linear equations, to conveniently and efficiently generate an appropriate initial solution of a to-be-solved system of linear equations.

The method in embodiments of this application may be applied to a computing device cluster, and the computing device cluster may include one or more computing devices.

A type of any computing device is not limited herein. For example, any computing device may be a terminal device, or may be a server, a container (container), a virtual machine (virtual machine), or the like.

In an example, the computing device cluster may be configured to implement a cloud management platform. In other words, embodiments of this application may be applied to a cloud management platform.

The cloud management platform is configured to manage an infrastructure that provides cloud services, and may provide computing, network, and storage capabilities based on services of a hardware resource and a software resource. For example, the cloud management platform may include one or more data centers, to provide cloud resources via the one or more data centers.

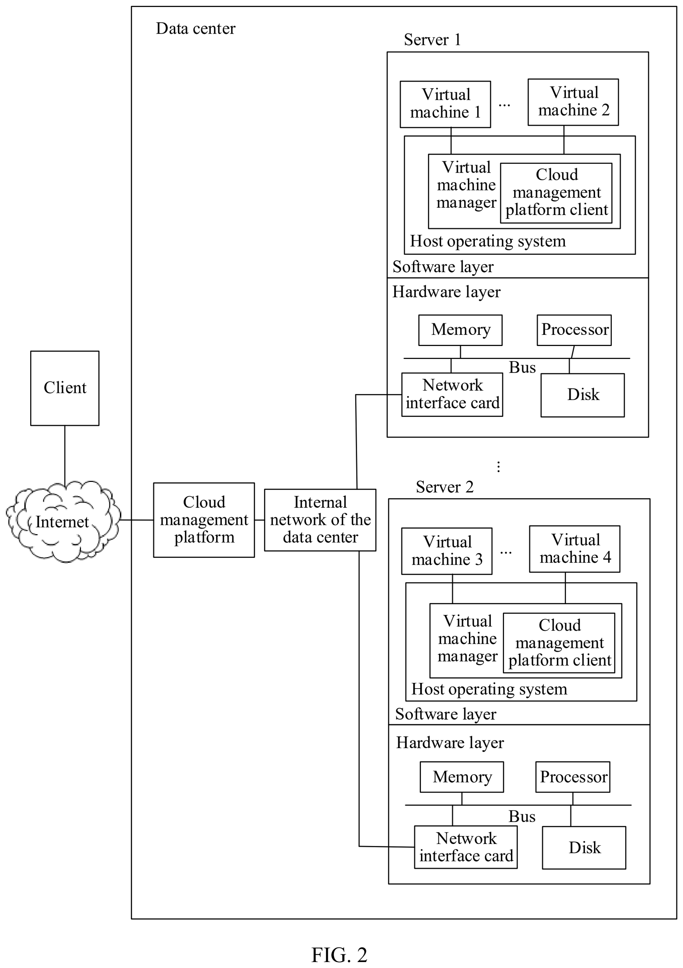

The following describes a data center with reference to a diagram of an architecture shown in FIG. 2.

In FIG. 2, in the data center, the cloud management platform performs information exchange with one server or a plurality of servers (for example, a server 1 and a server 2 in FIG. 2) through an internal network of the data center. The server includes a hardware layer and a software layer. The hardware layer includes hardware configured for the server. A PCI device may be, for example, a device such as a network adapter, a graphics processing unit (graphics processing unit, GPU), or an offload card that can be inserted into a peripheral component interconnect (peripheral component interconnect, PCI) of the server or a peripheral component interconnect express (peripheral component interconnect express, PCIe) slot. The software layer includes an operating system installed and running on the server (where an operating system relative to a virtual machine may be referred to as a host operating system). A virtual machine manager (also be referred to as a hypervisor) is disposed in the host operating system. A function of the virtual machine manager is to implement computing virtualization, network virtualization, and storage virtualization of the virtual machine, and manage the virtual machine. The virtual machine (virtual machine) is a complete computer system simulated by using software, has functions of a complete hardware system, and runs in a completely isolated environment. In the system architecture shown in FIG. 2, the plurality of servers are disposed in one data center, the servers may be configured to run virtual machines, and specifications of the virtual machines may be the same or may be different. The virtual machine may also be referred to as a cloud server (elastic compute service, ECS), an elastic instance, or the like, and different cloud service providers may have different names.

In an example of this embodiment of this application, the cloud management platform may be a public cloud platform. In this case, a cloud service provider such as an individual or a software developer that has a cloud resource development capability may provide a cloud service for a user, and the user obtains the cloud service through an Internet, but does not have cloud computing resources. In another embodiment of this application, the cloud management platform may be a private cloud platform or a hybrid cloud platform. This is not limited in this application.

Specifically, in the example shown in FIG. 2, the cloud management platform may provide an access interface (for example, an interface or an application programming interface (application programming interface, API)), and the user of the cloud management platform and the cloud service provider can operate a client to remotely access the access interface to register a cloud account and a password with the cloud management platform, and log in to the cloud management platform after authentication performed by the cloud management platform on the cloud account and the password succeeds, to create, manage, log in to, and operate the virtual machine in the cloud data center.

For example, when a system of linear equations solving task needs to be executed, some enterprises, organizations, or individuals may purchase the cloud service, to execute the related system of linear equations solving task by using cloud resources of the cloud management platform, and obtain a corresponding solving result from the cloud management platform.

Certainly, the cloud management platform may alternatively be another type of cloud management platform. This is not limited in embodiments of this application.

In this embodiment of this application, the cloud management platform may provide the user with an initial solution generation service for linear iteration and a linear iterative solver service, and may further provide a numerical calculation solver service, a CAE simulation service, and the like. In this way, the user may execute a CAE simulation-related task via the cloud management platform, for example, may execute the system of linear equations solving task via the cloud management platform.

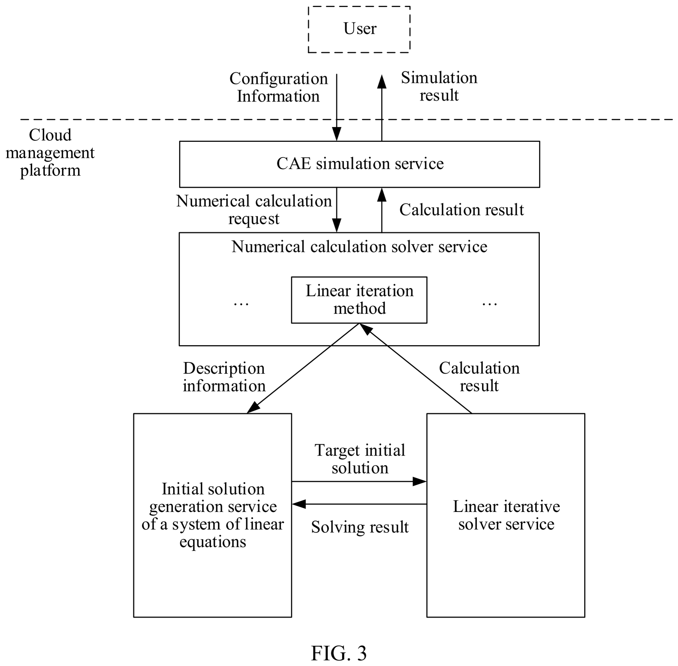

FIG. 3 is an example diagram of executing a CAE simulation-related task via a cloud management platform.

The user may send configuration information to a CAE simulation service of the cloud management platform, to configure the invoked service, and may trigger the CAE simulation service to send a numerical calculation request to a numerical calculation solver service. The numerical calculation request is for requesting to perform numerical calculation related to a system of linear equations. Then, the numerical calculation solver service may select, based on the configuration information of the user and the like, a linear iteration method to solve the system of linear equations, to invoke an initial solution generation service of the system of linear equations, and obtain a target initial solution based on related description information of the system of linear equations, and the initial solution generation service transmits the target initial solution to the linear iterative solver service. The linear iterative solver service may iteratively solve the system of linear equations based on the target initial solution, to obtain a solving result. The solving result may be fed back to the CAE simulation service, so that the CAE simulation service can obtain a simulation result and output the simulation result to the user.

It should be noted that the service in FIG. 3 is merely an example of a service provided by the cloud management platform, and is not a limitation. For example, in some other examples, the cloud management platform does not provide the CAE simulation service. The user performs CAE simulation via the client, to obtain information such as a corresponding computer model. Then, the user may directly send a numerical calculation request to the numerical calculation solver service of the cloud management platform via the client, to request numerical calculation related to a system of linear equations. In another embodiment provided in this application, the service may be deployed as a whole in an offline data center. This is not limited in this application.

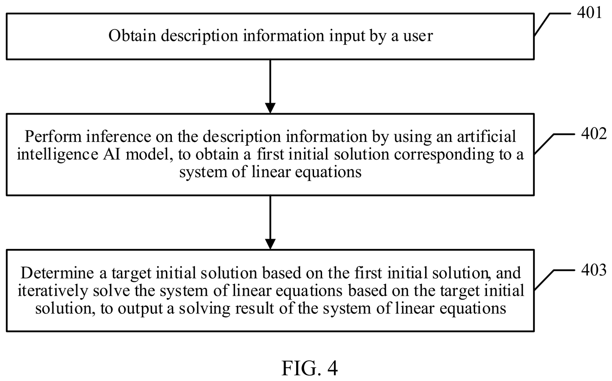

Based on the foregoing computing device cluster and the architecture of the cloud management platform shown in FIG. 3, as shown in FIG. 4, in this embodiment of this application, the computing device cluster that implements the cloud management platform may be configured to perform a method for solving a system of linear equations.

The method for solving a system of linear equations may include steps 401 to 403.

Step 401: Obtain description information input by a user.

The description information includes information about a system of linear equations, and the information about the system of linear equations includes a right-hand side.

In this embodiment of this application, the user may input the description information in a plurality of manners.

In an example, the user logs in to the cloud management platform via a client, and sends the description information to the cloud management platform via the client.

In this example, the user may obtain a computer model for CAE simulation and the like via the client, obtain physical problem information via the computer model, and generate the to-be-solved system of linear equations based on the physical problem information. Then, via the client, the description information including the information about the system of linear equations and the related physical problem information may be sent to the computing device cluster that implements the cloud management platform.

In another example, the user may obtain the description information by using cloud resources of the cloud management platform.

In this example, the user not only executes a system of linear equations solving task by using the cloud resources of the cloud management platform, but also constructs a computer model for CAE simulation by using a first cloud resource of the cloud management platform, obtains corresponding physical problem information by using a second cloud resource of the cloud management platform, and constructs the system of linear equations based on the physical problem information. Then, based on an instruction input by the user, the description information including information about the system of linear equations and the related physical problem information is transmitted from the first cloud resource to the second cloud resource that performs the method for solving a system of linear equations in this embodiment of this application.

The information about the system of linear equations is used to describe the system of linear equations. The information about the system of linear equations may include the right-hand side in the system of linear equations. In addition, in some examples, the information about the system of linear equations may further include a coefficient matrix in the system of linear equations.

For example, in a specific system of linear equations $Ax=b$, a coefficient matrix is $A$, and a right-hand side is $b$. In some scenarios, the system of linear equations may be transformed. Information about the system of linear equations may include the right-hand side in the system of linear equations, may include the coefficient matrix, or may include information obtained by transforming the coefficient matrix in the system of linear equations and/or information obtained by transforming the right-hand side.

In addition, in some embodiments, the description information further includes the to-be-solved physical problem information, the system of linear equations is obtained by performing numerical simulation on the to-be-solved physical problem information, and the to-be-solved physical problem information includes at least one of the following:

a boundary condition, mesh information, and a physical equation.

The physical problem information is used to describe a to-be-solved physical problem in an industrial application scenario.

A specific field of the industrial application scenario is not limited herein. For example, the industrial application scenario may be a scenario in an engineering field such as machinery, electronics, aerospace, automobiles, or architecture.

In some examples, the physical problem information may be described by using a corresponding CAE simulation scenario. For example, in the procedure shown in FIG. 1, in the CAE simulation scenario, one or more of information such as a boundary condition, mesh information, and a corresponding physical equation that are of a corresponding computer model may be obtained through steps such as geometric pre-processing, boundary condition setting, mesh division, and physical equation setting, to obtain physical problem information associated with the system of linear equations.

The physical problem information includes at least one of the following information:

a boundary condition, mesh information, and a physical equation.

The boundary condition is used to describe a boundary condition of the corresponding computer model in CAE simulation. In the procedure shown in FIG. 1, the boundary condition may be generated after the geometric pre-processing.

The mesh information is used to describe a mesh division manner of the corresponding computer model. Specifically, the mesh division manner is a division manner of dividing the computer model into a plurality of mesh cells. In the procedure shown in FIG. 1, the mesh information is completed in a mesh subdivision phase. The mesh information includes one or more of information such as mesh point coordinates and mesh division precision.

The physical equation is determined based on a to-be-solved physical problem.

The system of linear equations is obtained by performing numerical simulation on to-be-solved physical problem information. It can be learned that the system of linear equations is constructed based on the physical problem information. In other words, the physical problem information affects a subsequently generated system of linear equations, and the physical problem information used as upper-layer scenario information of the subsequently generated system of linear equations affects parameters such as a coefficient matrix and/or a right-hand side in the subsequently generated system of linear equations.

The following uses an example to describe a specific form of the description information.

In an example, a static charge distribution of a part (for example, a semiconductor material) in physical space needs to be solved by using an electric potential Poisson equation. For example, the physical space including a related computer model is divided into 2704 mesh points.

A specific form of the electric potential Poisson equation is as follows:

$$\nabla\big(\varepsilon(x,y)\nabla\varphi(x,y)\big) = -\rho(x,y)$$

$\varepsilon(x, y)$ represents a capacitance of a mesh point $(x, y)$, $\varphi(x, y)$ represents an electric potential of the mesh point $(x, y)$, and $\rho(x, y)$ represents a charge density of the mesh point $(x, y)$.

After steps such as geometric pre-processing, boundary condition setting, mesh division, and physical equation setting performed on the computer model related to the part in the physical space in a CAD simulation scenario, description information such as to-be-solved physical problem information and information about a system of linear equations may be obtained.

In this case, the description information may include some or all of the following content.

1. Charge density $\rho(x, y)$ of each of the 2704 mesh points.

The charge density $\rho(x, y)$ of each of the 2704 mesh points may be described by using a $2704 \times 1$ matrix. The matrix may be used as a right-hand side in the corresponding system of linear equations.

2. x and y coordinates of each of the 2704 mesh points.

The x and y coordinates of each of the 2704 mesh points may be described by using a $5408 \times 1$ matrix. The matrix may be used as mesh information.

3. Physical equation information.

A quantity of physical equations related to the description information is not limited herein. There may be one physical equation, or may be a system of physical equations including a plurality of physical equations.

For example, the physical equation information may include one or more of the following content:

(1) a physical equation in a mathematical form such as a system of partial differential equations, where the physical equation may include, for example, the foregoing electric potential Poisson equation; and

(2) a physical parameter value in the physical equation, for example, a capacitance $\varepsilon(x, y)$ of each of the 2704 mesh points.

The capacitance may be input by the user or preconfigured by a system. Inside a uniform medium, if the capacitance is a constant, the coefficient matrix in the system of linear equations is a constant, and the information about the system of linear equations in the description information may include only the right-hand side, and does not need to include the coefficient matrix. In a non-uniform medium, if the capacitance may be a function about a position, the information about the system of linear equations in the description information may include the coefficient matrix and the right-hand side.

4. Boundary condition.

There may be a plurality of manners of describing the boundary condition. For example, the boundary condition may be described by using mesh point information, or may be described in a form of an equation. The following separately uses examples for description.

(1) The boundary condition is described by using the mesh point information.
For example, a 2704×1 matrix may be used for description. 2704 elements in the matrix are in one-to-one correspondence with 2704 mesh points, and a value of each element is 0 or 1. When a value of a specific element is 1, it indicates that a corresponding mesh point includes an electrode, in other words, the mesh point is a boundary point. When a value of a specific element is 0, it indicates that a corresponding mesh point is a non-boundary point. It can be learned that the matrix may indicate the boundary point in the corresponding computer model, to indicate the corresponding boundary condition.
(2) The boundary condition is described in the form of the equation.

For example, the boundary condition may be described by using a Dirichlet (Dirichlet) condition:

$$\varphi(x, y)|_{x,y\in\Omega} = f_1(x, y), x \in \partial\Omega$$

$\varphi(x, y)$ represents the electric potential of the mesh point $(x, y)$, $\Omega$ represents a domain of definition, $f_1(x, y)$ represents a value of an electrode voltage (electrode voltage), and a value of $f_1(x, y)$ at the non-boundary point is 0.

Alternatively, the boundary condition may be described by using a Neumann (Neumann) condition:

$$\frac{\partial\varphi(x, y)|_{x,y\in\Omega}}{\partial\mathbf{n}} = f_2(x, y), x \in \partial\Omega$$

$f_2(x, y)$ represents an electrode flux (electrode flux), a value of $f_2(x, y)$ at the non-boundary point is 0, and n represents a normal vector of a plane $\partial\Omega$.

In addition, in a CAE simulation process, after the geometric pre-processing, the boundary condition setting, and the mesh division is performed on the computer model, a discretized to-be-solved system of linear equations may be obtained based on the physical problem information such as the physical equation, the boundary condition, and/or the mesh information and by using a method such as a finite volume method or a finite element method. That is, in this case, a coefficient matrix and a right-hand side in the to-be-solved system of linear equations may be determined.

In this way, information about the system of linear equations and the to-be-solved physical problem information such as the mesh information, the boundary condition, and/or the physical equation may be obtained as description information. The information about the system of linear equations in the description information may include the right-hand side. In addition, in some scenarios, the coefficient matrix may not be included. For example, if a material in the physical scenario is a uniform medium, and a corresponding capacitance is a constant, the coefficient matrix in the system of linear equations is a constant, and the information about the system of linear equations in the description information may include only the right-hand side, and does not need to include the coefficient matrix. In some other scenarios, the information about the system of linear equations may include the coefficient matrix. For example, if a material in the physical scenario is a non-uniform medium, and a corresponding capacitance may be a function about a position, the information about the system of linear equations in the description information may include the coefficient matrix and the right-hand side.

In some other scenarios, forms of the physical problem information and the information about the system of linear equations in the description information may be the same, or may be different.

For example, in another example, a relationship between a temperature and a pressure in a fluid in the physical space needs to be solved by using a pressure Poisson equation.

A specific form of the pressure Poisson equation is as follows:

$$-\frac{1}{\rho}\left(\frac{\partial^2 p}{\partial x^2} + \frac{\partial^2 p}{\partial y^2}\right) = f(x, y)$$

$\rho$ represents a fluid density of the mesh point $(x, y)$, $p$ represents a pressure of the mesh point $(x, y)$, and $f(x, y)$ represents a temperature of the mesh point $(x, y)$.

In this example, the boundary pressure is 0, that

is:

$$p(x, y) = 0, for\ (x, y) \in \partial\Omega$$

$\Omega$ is the domain of definition, and p is the pressure.

In this example, in a manner the same as or similar to the foregoing manner, coordinates of each mesh point may alternatively be obtained as mesh information to obtain a physical equation, and coordinates of a boundary point may be further obtained as a boundary condition. Because the boundary pressure is 0, the boundary condition does not need to be further described by using an equation or in another manner. In this way, physical problem information in this example can be obtained. Then, numerical simulation may be performed based on the physical problem information and by using the finite element method or in another manner, to obtain a coefficient matrix and a right-hand side in a discretized system of linear equations as information about the system of linear equations.

It may be understood that, in this embodiment of this application, a data form of description information may include one or more of forms such as a matrix, an equation, a vector, and a value.

It can be learned that, in this embodiment of this application, the physical problem information is closely related to the constructed system of linear equations when being used as upper-layer scenario information used to construct the system of linear equations. Therefore, the description information may include the information about the system of linear equations and the physical problem information associated with the system of linear equations, so that in a subsequent processing process, the physical problem information and the information about the system of linear equations are used together as an input of the AI model, thereby helping the AI model mine useful scenario feature information and feature information of the system of linear equations from the physical problem information.

Step 402: Perform inference on the description information by using the artificial intelligence AI model, to obtain a first initial solution corresponding to the system of linear equations.

In this embodiment of this application, a specific type of the AI model is not limited herein.

The AI model may be an existing model or a subsequently developed model. This is not limited in embodiments of this application. For example, the AI model may be a general model such as a physics-informed neural network (physics-informed neural network, PINN) or a CNN; or the AI model may be a model that can solve a partial differential equation (partial differential equation, PDE). For example, the AI model may be DeepONet, and both training and inference are used as a solving process.

For different AI models, processing performed on the description information may vary based on processing capabilities and requirements of the different AI models. For example, if the AI model is the PINN, and the PINN cannot well directly process input data in a form of a matrix, a physical equation, or the like, feature engineering may be performed on description information including the matrix and the physical equation. For example, the description information is encoded by using a feature extraction model, or data form conversion (for example, conversion into data in a vector form) is performed on the description information, and encoded description information or description information obtained through the data form conversion is then input into the PINN. If the AI model is the DeepONet, description information including a form of a matrix, a physical equation, and/or the like may be received as input data.

In this embodiment of this application, the AI model may be a trained model, so that the AI model can identify features of a system of linear equations based on input description information, to efficiently determine an appropriate initial solution of the system of linear equations.

In addition, in some embodiments, if the description information further includes the to-be-solved physical problem information, the AI model may identify features of physical problems and features of systems of linear equations in different physical scenarios, to determine initial solutions that are of the to-be-solved systems of linear equations and that are suitable for the different physical scenarios.

The AI model may be trained and completed in a computing device cluster, or may be transmitted and deployed to the computing device cluster after being trained and completed in another device.

The following describes an example of a training process of the AI model.

In this embodiment of this application, the training process may include one or more of the following steps.

1. Obtain a dataset. The dataset includes a plurality of samples and a label corresponding to each sample. Any sample may include a physical equation, a boundary condition, mesh information, a coefficient matrix, and a right-hand side. The label corresponding to the sample includes a corresponding initial solution, and may further include a performance indicator of a corresponding solving process. The performance indicator may include one or more of solving duration, solving precision, and a quantity of iterations.

A collection manner of the dataset is not limited herein. For example, the dataset may be obtained from an open source dataset, or the dataset may be generated by manually collecting information for iteratively solving systems of linear equations in various different scenarios.

2. Preprocess training data of the dataset.

A manner of the preprocessing is not limited herein. For example, the preprocessing may include one or more of the following manners:

(1) Data cleansing: including checking and processing a missing value, an abnormal value, and data that fails to be solved in the dataset, to ensure quality and accuracy of the description information.
(2) Data integration: A plurality of data sources are combined into one dataset, to solve inconsistency and duplication problems between the data sources.
(3) Data conversion: A process of converting the samples into samples in a form suitable for the AI model includes operations such as data standardization, normalization, and discretization.
(4) Data specification: A process of reducing a dataset scale can be implemented through clustering, sampling, feature extraction, and other methods, to train the AI models more quickly and reduce storage overheads.
(5) Feature engineering: Perform feature extraction, conversion, and selection on the samples, to better train the AI model.

3. Classify the dataset into a training set and a validation set.

4. Train one to-be-trained model or a plurality of to-be-trained models based on the training set, to obtain a trained model.

When there are the plurality of to-be-trained models, types and structures of different to-be-trained models may be the same, similar, or different.

In the training process, a parameter of the to-be-trained model in an iteration process may be updated based on a loss function. A specific form of the loss function is not limited herein.

In an example, the loss function may be used to evaluate a difference between a training initial solution output by the to-be-trained model in the iteration process and the initial solution in the label of the corresponding sample, and may further reflect a performance indicator in the label of the corresponding sample.

Specifically, in the iteration process, the difference between the training initial solution output by the to-be-trained model and the initial solution in the label of the corresponding sample is positively correlated with a loss value. In other words, a larger difference between the training initial solution output by the to-be-trained model in the iteration process and the initial solution in the label of the corresponding sample usually indicates a larger corresponding loss value. The performance indicator in the label of the corresponding sample means that corresponding poorer solving performance (for example, longer solving duration, lower solving precision, and a larger quantity of iterations) indicates a corresponding larger loss value.

In this way, one or more trained models may be obtained based on the training set and the loss function.

5. Verify the one or more trained models by using the verification set, and obtain an optimal model as the AI model through screening.

6. Deploy the obtained AI model to the computing device cluster.

After the obtained AI model is deployed to the computing device cluster, description information may be processed by using the AI model, to obtain a first initial solution corresponding to a system of linear equations.

After the preprocessing such as the data conversion and/or the feature engineering is performed on the description information, preprocessed description information may be input into the AI model, to determine, by using the AI model, the first initial solution that meets the features of the current physical scenario and that is suitable for the current to-be-solved system of linear equations.

Step 403: Determine a target initial solution based on the first initial solution, and iteratively solve the system of linear equations based on the target initial solution, to output a solving result of the system of linear equations.

In this embodiment of this application, after the first initial solution is obtained, the first initial solution may be used as the target initial solution of the system of linear equations, to iteratively solve the system of linear equations, to obtain the solving result of the system of linear equations; or after the first initial solution is obtained, a better target initial solution may be further queried based on the first initial solution, to iteratively solve the system of linear equations based on the better target initial solution, to obtain the solving result of the system of linear equations.

In this embodiment of this application, a functional module that implements an initial solution screening process in the computing device cluster is referred to as an initial solution adaptive optimization module.

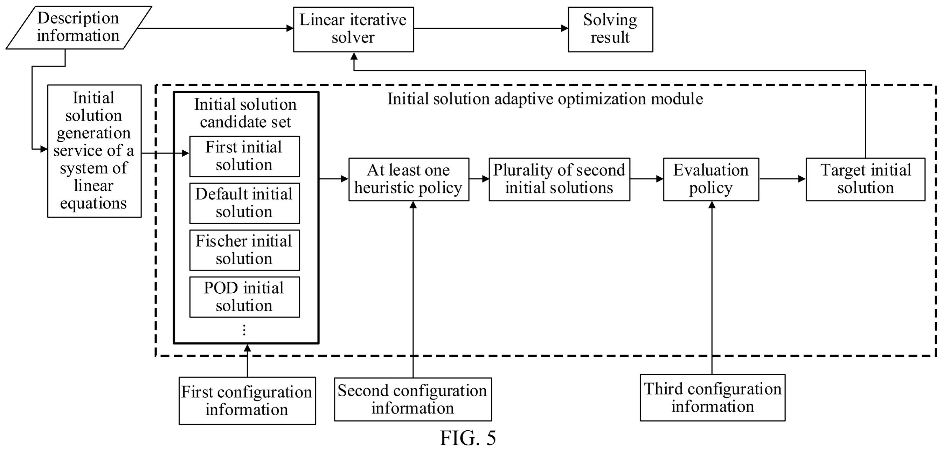

FIG. 5 is an example diagram of iteratively solving a system of linear equations by an initial solution adaptive optimization module. The following uses the initial solution adaptive optimization module in FIG. 5 as an example to describe a further initial solution screening process after a first initial solution is obtained. In an actual implementation process, the initial solution adaptive optimization module may be implemented by using one or more cloud services of a cloud management platform. This is not limited in embodiments of this application.

Specifically, as shown in FIG. 5, the initial solution screening process may include one or a combination of more of the following steps.

1. Obtain an initial solution candidate set, to select a target initial solution from the initial solution candidate set.

In some embodiments, step 401 includes:

obtaining first configuration information, where the first configuration information carries at least one initial solution generation manner used to generate an initial solution;

obtaining a plurality of initial solutions in the at least one initial solution generation manner indicated by the first configuration information, where the plurality of initial solutions include the first initial solution;

selecting the target initial solution from the plurality of initial solutions; and

iteratively solving the system of linear equations based on the target initial solution, to output a solving result of the system of linear equations.

In this embodiment of this application, the cloud management platform may provide a first configuration interface, and a plurality of preset initial solution generation manners are displayed on the first configuration interface. A user may select the plurality of initial solution generation manners from the first configuration interface and perform confirmation. In this way, the user may input the first configuration information to the cloud management platform. That is, the first configuration information is configured and input by the user.

Alternatively, on the cloud management platform, a developer may preconfigure, based on expert experience or the like, the plurality of initial solution generation manners in the cloud service provided for the user. That is, in this example, the first configuration information may be preconfigured by the developer in the related cloud service.

The first configuration information indicates the at least one initial solution generation manner, and each initial solution generation manner corresponds to one initial solution of the system of linear equations. In this way, a plurality of initial solutions may be obtained in the at least one initial solution generation manner.

Specific content of the at least one initial solution generation manner is not limited herein.

The at least one initial solution generation manner includes a manner of generating an initial solution by using an AI model. That is, in this embodiment of this application, a manner of generating the first initial solution through the foregoing steps 401 and 402 is included.

In addition, for example, in the example shown in FIG. 5, the plurality of initial solution generation manners may further include one or more of the following manners:

(1) a default initial solution;
(2) an initial solution obtained by using a Fischer (Fischer) algorithm; and
(3) an initial solution obtained by using a proper orthogonal decomposition (proper orthogonal decomposition, POD) algorithm.

The plurality of initial solutions may be included in the initial solution candidate set. After the plurality of initial solutions are obtained, the target initial solution may be selected from the plurality of initial solutions by using a search algorithm and/or an evaluation indicator and/or in another manner.

In this embodiment of this application, considering that different initial solution generation manners may be suitable for physical problems in different physical scenarios, the plurality of initial solutions may be provided based on the first configuration information. In this way, adaptation degrees of different initial solution generation manners in different physical problems may be fully considered, and a more appropriate target initial solution in the physical problem of a current category is selected from the plurality of initial solutions, so that quality of the finally obtained target initial solution is improved, thereby improving solving efficiency of an iterative solving process of the system of linear equations.

2. Screen the plurality of initial solutions in the initial solution candidate set according to a heuristic policy, to obtain the target initial solution.

In some embodiments, selecting the target initial solution from the plurality of initial solutions includes:

obtaining second configuration information, where the second configuration information carries at least one heuristic policy; and

selecting the target initial solution from the plurality of initial solutions according to the at least one heuristic policy.

In this embodiment of this application, the cloud management platform may provide a second configuration interface, and a plurality of preset heuristic policies are displayed on the second configuration interface. The user may select at least one heuristic policy from the second configuration interface and perform confirmation. In this way, the user may input the second configuration information to the cloud management platform. That is, the second configuration information is configured by the user.

A quantity and types of preset heuristic policies on the second configuration interface are not limited herein.

For example, the preset heuristic policy on the second configuration interface may include one or more of the following policies:

a greedy search algorithm, a simulated annealing algorithm, a genetic algorithm, and a particle swarm optimization algorithm.

Alternatively, on the cloud management platform, the developer may preconfigure, based on the experience or the like, the target heuristic policy in the cloud service provided for the user. That is, in this example, the second configuration information may be preconfigured by the developer in the related cloud service.

A specific type of the at least one heuristic policy is not limited herein either.

That the second configuration information carries the at least one heuristic policy may mean that the second configuration information carries information such as an identifier and/or a related operator of the at least one heuristic policy. In this way, the cloud management platform may screen the plurality of initial solutions based on the second configuration information according to the at least one heuristic policy.

A specific process of selecting the target initial solution from the plurality of initial solutions according to the at least one heuristic policy is not limited herein. For example, the plurality of initial solutions may be screened according to a heuristic policy; or multi-level screening may be performed on the plurality of initial solutions according to a plurality of heuristic policies. For example, preliminary screening may be performed on the plurality of initial solutions by using the greedy search algorithm, and then initial solutions obtained through the preliminary screening are further screened by using the genetic algorithm.

The plurality of initial solutions are screened according to the at least one heuristic policy, so that one or more initial solutions may be selected from the plurality of initial solutions. For ease of description, in this embodiment of this application, the initial solution selected from the plurality of initial solutions according to the at least one heuristic policy is referred to as a second initial solution. There may be one second initial solution or a plurality of second initial solutions.

If the plurality of initial solutions are screened according to the target heuristic policy, and one second initial solution may be directly selected from the plurality of initial solutions, the second initial solution may be used as the target initial solution. If the plurality of initial solutions are screened according to the target heuristic policy, and the plurality of second initial solutions may be selected from the plurality of initial solutions (for example, in the example shown in FIG. 5, there may be the plurality of second initial solutions), the plurality of second initial solutions may be further screened, to select a better target initial solution from the plurality of second initial solutions.

In this embodiment of this application, the plurality of initial solutions are screened according to the target heuristic policy, so that a part of initial solutions that better meet features of the current physical problem can be selected from the plurality of initial solutions as the second initial solution, and the more appropriate target initial solution can be obtained through screening in the physical problem of the current category, thereby improving quality of the finally obtained target initial solution.

3. Select the target initial solution from the plurality of initial solutions according to an evaluation policy.

In some embodiments, selecting the target initial solution from the plurality of initial solutions includes:

obtaining third configuration information, where the third configuration information carries the evaluation policy, the evaluation policy includes an evaluation indicator, or includes an evaluation indicator and a weight corresponding to each evaluation indicator, and the evaluation indicator includes one or more of solving duration, solving precision, and a quantity of iterations; and

selecting the target initial solution from the plurality of initial solutions according to the evaluation policy.

In this embodiment of this application, the cloud management platform may provide a third configuration interface. On the third configuration interface, a plurality of preset evaluation indicators are displayed, and a weight configuration item of each preset evaluation indicator may be further displayed. The user may select one or more evaluation indicators from the third configuration interface, or may configure, by using a weight configuration item of the selected evaluation indicator, a weight corresponding to the corresponding evaluation indicator. In this way, the user may input the third configuration information to the cloud management platform. That is, the third configuration information is configured and input by the user.

Alternatively, on the cloud management platform, a developer may preconfigure, based on the experience or the like, the evaluation indicator in the cloud service provided for the user, and further configure a weight corresponding to each evaluation indicator. That is, in this example, the third configuration information may be preconfigured by the developer in the related cloud service.

The third configuration information may carry an identifier of the evaluation policy, or may carry content of the evaluation policy, for example, carry an evaluation indicator and a weight corresponding to each evaluation indicator.

The evaluation indicator included in the evaluation policy may include one or more of the following indicators:

solving duration, solving precision, and a quantity of iterations.

The solving duration is duration needed in an iterative solving process when the corresponding second initial solution is used as the initial solution in the iterative solving process of the system of linear equations.

The solving precision is precision of the solving result obtained through iterative solving when the corresponding second initial solution is used as the initial solution in the iterative solving process of the system of linear equations. The precision may describe a difference between the solving result and an accurate solving result of the system of linear equations.

The quantity of iterations is a quantity of iterations performed in the iterative solving process when the corresponding second initial solution is used as the initial solution in the iterative solving process of the system of linear equations.

The weight corresponding to each evaluation indicator may be configured by the user, or may be preconfigured by the developer or the like.

It may be understood that any evaluation indicator may be used to evaluate iteration performance when the corresponding initial solution is used as the initial solution in the iterative solving process of the system of linear equations. In this way, the corresponding target initial solution with good iteration performance may be selected from the plurality of initial solutions based on the information such as the evaluation indicator and the related weight in the evaluation policy.

In this embodiment of this application, when the target initial solution is selected from the plurality of initial solutions according to the evaluation policy, the target initial solution may be directly selected from the plurality of initial solutions according to the evaluation policy; or in the example shown in FIG. 5, after the plurality of second initial solutions are selected from the plurality of initial solutions according to the at least one heuristic policy, the target initial solution is selected from the plurality of second initial solutions according to the evaluation policy.

That is, the foregoing three methods of the initial solution screening process may be applied in combination, or may be applied separately. The initial solution screening process in this embodiment of this application may be performed in a plurality of manners. This is not limited herein.

In this embodiment of this application, the AI model may be used to mine feature information of the system of linear equations, to efficiently determine the appropriate initial solution of the current system of linear equations, thereby improving solving efficiency of the system of linear equations, and avoiding a generalization problem caused by an initial solution determined based on the expert experience and the default initial solution.

In addition, currently, conventional algorithms for determining the initial solution of the system of linear equations are usually used to predict the initial solution of the system of linear equations in a mathematical derivation manner, and are, for example, a proper orthogonal decomposition (proper orthogonal decomposition, POD) algorithm and a Fischer (Fischer) algorithm.

Only information about a coefficient matrix in the system of linear equations is usually considered for these conventional algorithms for determining the initial solution of the system of linear equations, but features of a to-be-solved problem cannot be well reflected based only on the coefficient matrix in the system of linear equations. Therefore, there is usually a large deviation in an effect of the initial solution predicted by using the conventional algorithms for determining the initial solution of the system of linear equations, and appropriate initial solutions cannot be provided for various scenarios.

However, in some examples of this application, description information may include not only information about the system of linear equations, but also to-be-solved physical problem information. In this way, the AI model can fully mine solving information of the physical problem in a current physical scenario and the information about the system of linear equations, so that the initial solution can be fully determined for the current to-be-solved system of linear equations based on multi-dimensional features. Therefore, requirements of a plurality of application scenarios can be met. For example, appropriate initial solutions can be efficiently provided for to-be-solved systems of linear equations in various engineering application scenarios.

Specifically, in this embodiment of this application, the description information may be processed by using the AI model.

The description information includes multi-dimensional features such as a plurality of aspects of information such as the information about the system of linear equations and the physical problem information associated with the system of linear equations. The AI model is a trained model, and has a capability of identifying features of physical problems in different physical scenarios and the features of the system of linear equations, so that the first initial solution that meets features of the current application scenario and that is suitable for the current to-be-solved system of linear equations can be determined based on the multi-dimensional features of the current to-be-solved physical problem extracted from the input description information.

It can be learned that, according to this embodiment of this application, appropriate initial solutions can be efficiently provided for systems of linear equations corresponding to physical problems in different scenarios, to improve speeds of iteratively solving the systems of linear equations, obtain corresponding solving results more quickly, and improve efficiency of solving the corresponding systems of linear equations.

In addition, in some embodiments, after the solving result is obtained, the AI model may be further optimized based on the solving result, to improve performance of the AI model, so that the AI model can better adapt to a requirement of an actual application scenario.

Specifically, in some embodiments, the method further includes:

generating training data, where the training data includes a training sample and a label corresponding to the training sample, the training sample includes the description information, and the label corresponding to the training sample is obtained based on the first initial solution; and

training the AI model based on the training data, to obtain an optimized AI model.

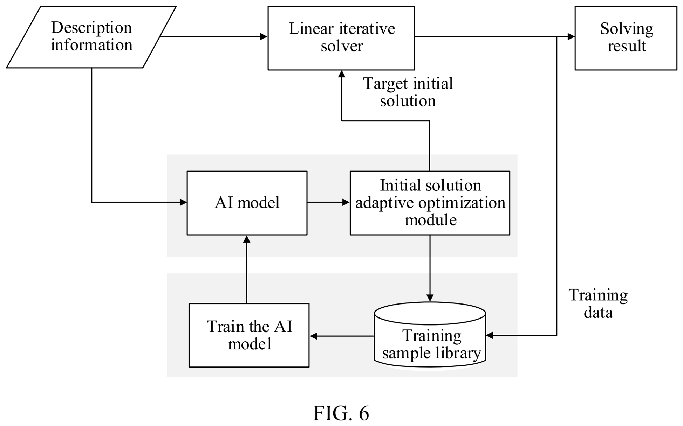

FIG. 6 is an example diagram of iteratively solving a system of linear equations according to an embodiment of this application.

It can be learned that, in this embodiment of this application, target initial solutions corresponding to different systems of linear equations may be collected. In addition, in some examples, target initial solutions corresponding to systems of linear equations in different physical problem scenarios in an actual application scenario may be further collected, and related performance data of actual iterative solving results is obtained, so that whether the corresponding target initial solutions are appropriate initial solutions can be well determined, and corresponding training data can be generated.

Then, an AI model may be trained based on the training data to obtain an optimized AI model, and a subsequent method for solving a system of linear equations is then performed based on the optimized AI model.

In this way, the AI model may be continuously iteratively updated with a change of user data distribution and a scale in the actual application scenario for continuous optimization, so that the optimized AI model better adapts to a requirement of the current scenario, and can generate better initial solutions for different physical problems and corresponding systems of linear equations, thereby improving solving efficiency.

In some embodiments, the method further includes:

> obtaining a performance indicator corresponding to the solving result, where the performance indicator includes one or more of solving duration, solving precision, and a quantity of iterations; and
> training the AI model based on the training data, to obtain the optimized AI model includes:
> training the AI model based on the training data and a loss function, to obtain the optimized AI model, where the loss function is constructed based on the performance indicator.

In embodiments of this application, a specific form of the loss function is not limited herein.

In an example, the loss function may reflect a performance indicator in a label of a corresponding sample.

The performance indicator may be obtained through a solving process of a corresponding solving result. For example, a quantity of iterations in the solving process may be used as a performance indicator; and solving duration of the solving process may also be used as a performance indicator. In addition, a difference between the target initial solution and an accurate initial solution of the system of linear equations may be further calculated, to obtain corresponding solving precision, which is used as a performance indicator. For example, the target initial solution $x0$ may be substituted into the system of linear equations $Ax=b$, and a difference between $b$ and $Ax0$ is then calculated. The difference may be considered as a residual corresponding to the target initial solution, and may reflect corresponding solving precision.

Specifically, the performance indicator in the label of the corresponding training sample means that corresponding poorer solving performance (for example, longer solving duration, lower solving precision, and a larger quantity of iterations) indicates a corresponding larger loss value.

In addition, the loss function may be further used to evaluate a difference between a training initial solution output by a to-be-trained model in an iteration process and an initial solution in a label of a corresponding sample.

In the iteration process, the difference between the training initial solution output by the to-be-trained model and the initial solution in the label of the corresponding sample is positively correlated with the loss value. In other words, a larger difference between the training initial solution output by the to-be-trained model in the iteration process and the initial solution in the label of the corresponding sample usually indicates a larger corresponding loss value.

In this embodiment of this application, the loss function is constructed based on the performance indicator, so that the AI model can be optimized in a direction of a better performance indicator in a training process, to help improve performance of the AI model.

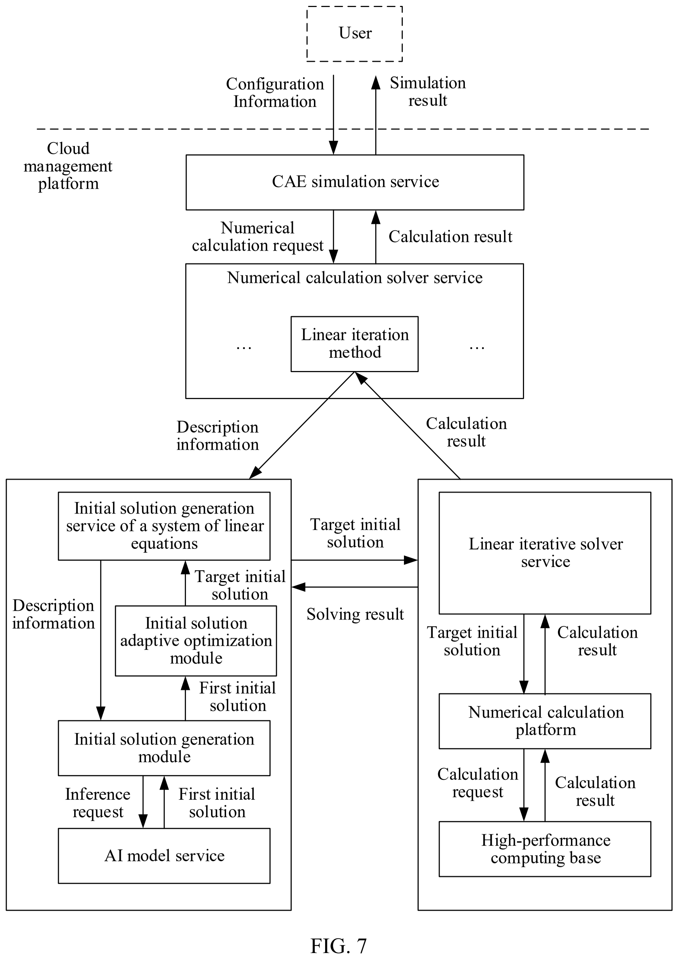

It can be learned that, based on the descriptions of the foregoing embodiment, an example specific implementation of the initial solution generation service for linear iteration and the linear iterative solver service shown in FIG. 3 is shown in FIG. 7.

In an example shown in FIG. 7, the initial solution generation service of a system of linear equations may invoke, by using an initial solution generation module, an AI model in an AI model service to process description information, to obtain a first initial solution. Then, an initial solution adaptive optimization module may obtain a target initial solution through screening based on an initial solution candidate set including the first initial solution according to a target heuristic policy, an evaluation policy, and the like. Then, the initial solution generation service of the system of linear equations may send the target initial solution to the linear iterative solver service, so that the linear iterative solver invokes, via a data computing platform, a resource of a high-performance computing base to iteratively solve the system of linear equations based on the target initial solution, to obtain a calculation result of the system of linear equations.

The following uses an example to describe a specific application process of the method for solving a system of linear equations in this embodiment of this application in the engineering field.

In an example, electromagnetic performance optimization simulation of a solenoid valve needs to be implemented. The electromagnetic performance optimization simulation of the solenoid valve belongs to two-dimensional low-frequency electromagnetic nonlinear simulation.

The solenoid valve is an axisymmetric model, and solving calculation may be performed by using a two-dimensional axisymmetric computer model. Through solving, core electromagnetic performance parameters such as a magnetic density, a current density, a loss, a current, a voltage, inductance, back electromotive force, corresponding time, a response acceleration, and valve core (plunger) electromagnetic force may be obtained, to comprehensively evaluate, analyze, design, and optimize electromagnetic performance of the solenoid valve.

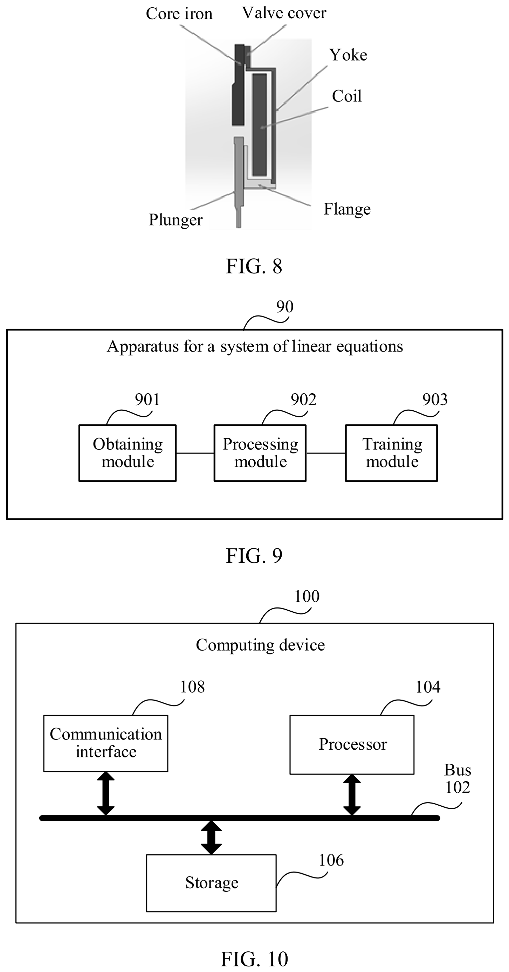

FIG. 8 is a diagram of an example of a two-dimensional axisymmetric computer model of a solenoid valve.

Based on the computer model, electromagnetic performance optimization simulation of solenoid valve electromagnetic simulation can be solved. In this scenario, a Newton iteration method may be used for a to-be-solved nonlinear physical problem, and in each nonlinear iteration process, a system of linear equations may be constructed for solving.

In this case, a target initial solution of the system of linear equations in each nonlinear iteration process may be obtained by using an AI model. The AI model may be trained in advance based on a historical training dataset. The historical training dataset includes a training sample in an electromagnetic performance optimization simulation scenario of the solenoid valve and an initial solution label corresponding to the training sample, and the training sample in the electromagnetic performance optimization simulation scenario of the solenoid valve includes a boundary condition, mesh information, and a physical equation of a historical computer model in the electromagnetic performance optimization simulation scenario of the solenoid valve.

Therefore, the AI model obtained through training by using the historical training dataset has a capability of providing an appropriate first initial solution of a to-be-solved system of linear equations in the electromagnetic performance optimization simulation scenario of the solenoid valve.

Specifically, in each nonlinear iteration process, information about a system of linear equations in the current nonlinear iteration process and physical problem information such as a boundary condition, mesh information, and a physical equation that correspond to the system of linear equations may be obtained, and after the information about the system of linear equations and the corresponding physical problem information are preprocessed, preprocessed information about the system of linear equations and corresponding physical problem information are input into the AI model, to obtain a first initial solution of the system of linear equations in the current nonlinear iteration process.

Next, a default initial solution, an initial solution obtained based on a Fischer algorithm, and an initial solution obtained based on a POD algorithm may be obtained based on first configuration information. In this way, an initial solution candidate set may be obtained. The initial solution candidate set includes the first initial solution, the default initial solution, the initial solution obtained based on the Fischer algorithm, and the initial solution obtained based on the POD algorithm.

Still, a plurality of second initial solutions are selected from the initial solution candidate set based on second configuration information configured by a user and according to a target heuristic rule. Then, a score of each second initial solution may be calculated based on an evaluation indicator configured by the user and a weight corresponding to each evaluation indicator, and an optimal initial solution is selected as a target initial solution from the plurality of second initial solutions based on the score of each second initial solution. The target initial solution is used as a target initial solution of the system of linear equations in the current nonlinear iteration process, to iteratively solve the system of linear equations, to obtain a solving result of the system of linear equations in the current nonlinear iteration process.

It can be learned that, in each nonlinear iteration process, the foregoing method for solving a system of linear equations may be used until an iteration termination condition for nonlinear iteration is met, and a final solving result of a to-be-solved nonlinear physical problem is obtained.

In a specific implementation process of this example, mesh division precision of two computer models may be used. Regardless of which mesh division precision is used, in each nonlinear iteration process, when the foregoing method for solving a system of linear equations is used to obtain the target initial solution to solve the system of linear equations, both solving duration and a quantity of linear iterations are less than those used when a conventional manner is used to obtain the target initial solution to solve the system of linear equations.

It can be learned that, in this example, the target initial solution is obtained by using the foregoing method for solving a system of linear equations to solve the system of linear equations, so that the more appropriate target initial solution can be provided for the to-be-solved system of linear equations, to significantly improve a solving speed of an entire nonlinear iteration process.

The foregoing describes, from a plurality of aspects, the method for solving a system of linear equations provided in embodiments of this application. The following describes, with reference to the accompanying drawings, an apparatus for solving a system of linear equations provided in embodiments of this application.

As shown in FIG. 9, an embodiment of this application provides an apparatus 90 for solving a system of linear equations. The apparatus 90 for solving a system of linear equations includes:

an obtaining module 901, configured to obtain description information input by a user, where the description information includes information about a system of linear equations, and the information about the system of linear equations includes a right-hand side; and
a processing module 902, configured to:

perform inference on the description information by using an artificial intelligence AI model, to obtain a first initial solution corresponding to the system of linear equations; and

determine a target initial solution based on the first initial solution, and iteratively solve the system of linear equations based on the target initial solution, to output a solving result of the system of linear equations.

Optionally, the description information further includes to-be-solved physical problem information, the system of linear equations is obtained by performing numerical simulation on the to-be-solved physical problem information, and the to-be-solved physical problem information includes at least one of the following:

a boundary condition, mesh information, and a physical equation.

Optionally, the obtaining module 901 is configured to:

obtain first configuration information, where the first configuration information carries at least one initial solution generation manner used to generate an initial solution.

The processing module 902 is configured to:

obtain a plurality of initial solutions in the at least one initial solution generation manner indicated by the first configuration information, where the plurality of initial solutions include the first initial solution;

select the target initial solution from the plurality of initial solutions; and

iteratively solve the system of linear equations based on the target initial solution, to output the solving result of the system of linear equations.

Optionally, the obtaining module 901 is configured to obtain second configuration information, where the second configuration information carries at least one heuristic policy.

The processing module 902 is configured to select the target initial solution from the plurality of initial solutions according to the at least one heuristic policy.

Optionally, the obtaining module 901 is configured to obtain third configuration information, where the third configuration information carries an evaluation policy, the evaluation policy includes an evaluation indicator, or includes an evaluation indicator and a weight corresponding to each evaluation indicator, and the evaluation indicator includes one or more of solving duration, solving precision, and a quantity of iterations.

The processing module 902 is configured to select the target initial solution from the plurality of initial solutions according to the evaluation policy.

Optionally, the apparatus 90 further includes a training module 903.

The training module 903 is configured to:

generate training data, where the training data includes a training sample and a label corresponding to the training sample, the training sample includes the description information, and the label corresponding to the training sample is obtained based on the first initial solution; and

train the AI model based on the training data, to obtain an optimized AI model.

Optionally, the obtaining module 901 is further configured to:

obtain a performance indicator corresponding to the solving result, where the performance indicator includes one or more of solving duration, solving precision, and a quantity of iterations.

The training module 903 is configured to:

train the AI model based on the training data and a loss function, to obtain the optimized AI model, where the loss function is constructed based on the performance indicator.

Optionally, the AI model is a general model or a model used to solve a partial differential equation PDE, the general model includes a CNN or a PINN, and the model used to solve the PDE includes DeepONet.

In some examples, the obtaining module 901 may implement interaction with the user, and the processing module 902 may perform some or all of the steps in the initial solution generation service for linear iteration and the linear iterative solver service in any one of the foregoing method embodiments. The training module may perform steps such as training and optimization of the AI model in the initial solution generation service for linear iteration in any one of the foregoing method embodiments.

In this embodiment of this application, the module is used as an example of a software functional unit, and the apparatus for solving a system of linear equations may include code running on a computing instance. The computing instance may be at least one of computing devices such as a physical host (computing device), a virtual machine, and a container. Further, there may be one or more computing devices. For example, the apparatus for solving a system of linear equations may include code running on a plurality of hosts/virtual machines/containers. It should be noted that the plurality of hosts/virtual machines/containers configured to run an application program may be distributed in a same region or may be distributed in different regions. A plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is disposed in one region. A communication gateway needs to be disposed in each VPC for communication between two VPCs in a same region or between VPCs in different regions. Interconnection between VPCs is implemented via the communication gateway.

The module is used as an example of a hardware functional unit, and the apparatus for solving a system of linear equations may include at least one computing device, for example, a server. Alternatively, the apparatus for solving a system of linear equations may be a device implemented by using an application-specific integrated circuit (application-specific integrated circuit, ASIC) or a programmable logic device (programmable logic device, PLD). The PLD may be a complex PLD (complex PLD, CPLD), a field programmable gate array (field programmable gate array, FPGA), generic array logic (generic array logic, GAL), or any combination thereof.

A plurality of computing devices included in the apparatus for solving a system of linear equations may be distributed in a same region, or may be distributed in different regions. The plurality of computing devices included in the apparatus for solving a system of linear equations may be distributed in a same AZ, or may be distributed in different AZs. Similarly, the plurality of computing devices included in the apparatus for solving a system of linear equations may be distributed in a same VPC, or may be distributed in a plurality of VPCs. The plurality of computing devices may be any combination of computing devices such as the server, the ASIC, the PLD, the CPLD, the FPGA, and the GAL.

It should be noted that, in another embodiment, the obtaining module may be configured to perform any step in the method for solving a system of linear equations, the processing module may be configured to perform any step in the method for solving a system of linear equations, and the training module may be configured to perform any step in the method for solving a system of linear equations. Steps implemented by the obtaining module, the processing module, and the training module may be specified based on a requirement. The obtaining module, the processing module, and the training module respectively implement different steps in the method for solving a system of linear equations, to implement all functions of the apparatus for solving a system of linear equations.

An embodiment of this application further provides a computing device 100. As shown in FIG. 10, the computing device 100 includes a bus 102, a processor 104, a storage 106, and a communication interface 108. The processor 104, the storage 106, and the communication interface 108 communicate with each other via the bus 102. The computing device 100 may be a server or a terminal device. It should be understood that a quantity of processors and a quantity of storages in the computing device 100 are not limited in this application.

The bus 102 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one line is used to represent the bus in FIG. 10, but this does not mean that there is only one bus or only one type of bus. The bus 104 may include a path for transmitting information between various components (for example, the storage 106, the processor 104, and the communication interface 108) of the computing device 100.

The processor 104 may include any one or more of processors such as a central processing unit (central processing unit, CPU), a graphics processing unit (graphics processing unit, GPU), a microprocessor (microprocessor, MP), or a digital signal processor (digital signal processor, DSP).

The storage 106 may include a volatile memory (volatile memory), for example, a random access memory (random access memory, RAM). The processor 104 may further include a non-volatile memory (non-volatile memory), for example, a read-only memory (read-only memory, ROM), a flash memory, a hard disk drive (hard disk drive, HDD), or a solid-state drive (solid-state drive, SSD).

The storage 106 stores executable program code, and the processor 104 executes the executable program code to separately implement functions of the foregoing obtaining module, processing module, and/or training module, to implement the method for solving a system of linear equations applied to a computing device cluster in the foregoing embodiments. That is, the storage 106 stores instructions used to perform the method for solving a system of linear equations applied to a computing device cluster in the foregoing embodiments.

The communication interface 108 uses a transceiver module, for example, but not limited to, a network interface card or a transceiver, to implement communication between the computing device 100 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

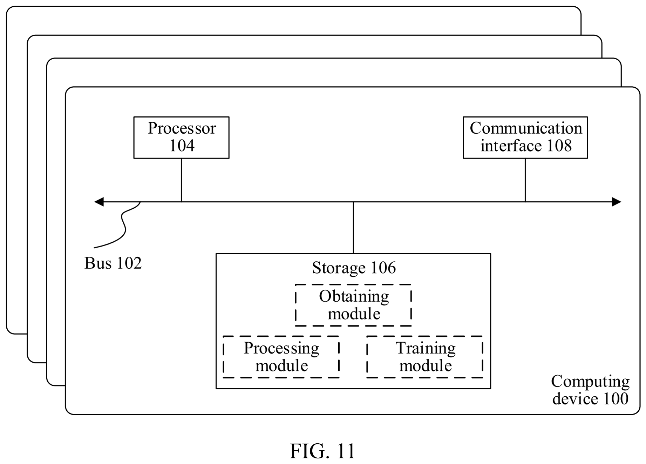

As shown in FIG. 11, the computing device cluster includes at least one computing device 100. A storage 106 in one or more computing devices 100 in the computing device cluster may store same instructions used to perform a method for solving a system of linear equations.

In some possible implementations, the storage 106 in the one or more computing devices 100 in the computing device cluster each may alternatively separately store some instructions used to perform the method for solving a system of linear equations. In other words, a combination of the one or more computing devices 100 may jointly execute instructions used to perform the method for solving a system of linear equations.

It should be noted that storages 106 in different computing devices 100 in the computing device cluster may store different instructions, which are respectively used to perform a part of functions of the method for solving a system of linear equations. In other words, the instructions stored in the storages 106 in the different computing devices 100 may implement functions of one or more of an obtaining module, a processing module, and a training module.

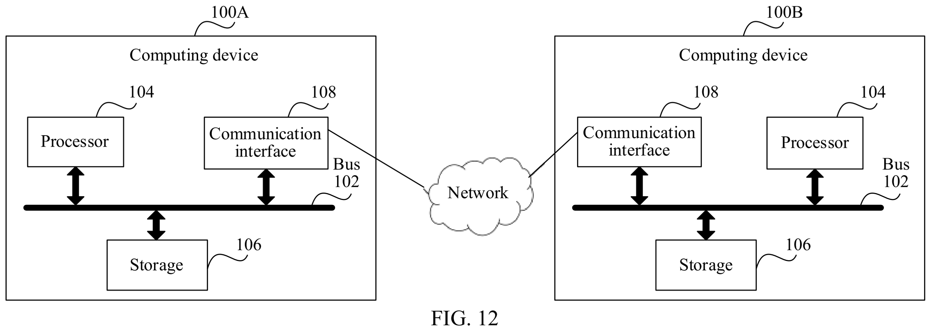

In some possible implementations, the one or more computing devices in the computing device cluster may be connected through a network. The network may be a wide area network, a local area network, or the like. FIG. 12 shows a possible implementation. As shown in FIG. 12, two computing devices 100A and 100B are connected through a network. Specifically, the computing devices are connected to the network through communication interfaces of the computing devices. In this possible implementation, a storage 106 in the computing device 100A may store instructions for performing a function of an obtaining module; and a storage 106 in the computing device 100B may store instructions for performing a function of a processing module. Alternatively, a storage 106 in the computing device 100A may store instructions for performing a part of functions of a training module; and a storage 106 in the computing device 100B may store instructions for performing another part of functions of the processing module.

It should be understood that a function of the computing device 100A shown in FIG. 12 may alternatively be completed by a plurality of computing devices 100. Similarly, a function of the computing device 100B may alternatively be completed by the plurality of computing devices 100.

An embodiment of this application further provides another computing device cluster. For a connection relationship between computing devices in the computing device cluster, refer to the connection manner of the computing device cluster in FIG. 11 and FIG. 12 similarly. A difference lies in that a storage 106 in one or more computing devices 100 in the computing device cluster may store same instructions used to perform a method for solving a system of linear equations.

In some possible implementations, the storage 106 in the one or more computing devices 100 in the computing device cluster each may alternatively separately store some instructions used to perform the method for solving a system of linear equations. In other words, a combination of the one or more computing devices 100 may jointly execute instructions used to perform the method for solving a system of linear equations.

It should be noted that storages 106 in different computing devices 100 in the computing device cluster may store different instructions, which are used to perform a part of functions of a method for solving a system of linear equations. In other words, the instructions stored in the storages 106 in the different computing devices 100 may implement functions of one or more of an obtaining module, a processing module, and a training module.

An embodiment of this application further provides a computer program product including instructions. The computer program product may be a software or program product that includes instructions and that can be run on a computing device or stored in any usable medium. When the computer program product runs on at least one computing device, the at least one computing device is caused to perform a method for solving a system of linear equations.

An embodiment of this application further provides a computer-readable storage medium. The computer-readable storage medium may be any usable medium that can be stored by a computing device or a data storage device such as a data center integrating one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct the computing device to perform a method for solving a system of linear equations.

An embodiment of this application further provides a chip system. The chip system includes a processor, and the processor is configured to implement steps performed by the foregoing computing device cluster. In a possible design, the chip system may further include a storage. The storage is configured to store necessary program instructions and data. The chip system may include a chip, or may include a chip and another discrete device.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the apparatus embodiments described above are merely examples. For example, division into units is merely logical function division, and may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, that is, may be located in one position, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions in this application essentially, or the part contributing to a conventional technology, or all or some of the technical solutions may be implemented in a form of a software product. The computer software product is stored in a storage medium, and includes several instructions for indicating a computer device (which may be a personal computer, a server, a network device, or the like) to perform all or some of steps in the methods described in embodiments of this application. The storage medium includes any medium that can store program code, such as a USB flash drive, a removable hard disk, a read-only memory (ROM, read-only memory), a random access memory (RAM, random access memory), a magnetic disk, or an optical disc.

**Claims**

1. A method for solving a system of linear equations, applied to a computing device or a computing device cluster, wherein the method comprises:

   Obtaining description information input by a user, wherein the description information comprises information about a system of linear equations, and the information about the system of linear equations comprises a right-hand side;
   Performing inference on the description information by using an artificial intelligence AI model, to obtain a first initial solution corresponding to the system of linear equations; and
   Determining a target initial solution based on the first initial solution, and iteratively solving the system of linear equations based on the target initial solution, to output a solving result of the system of linear equations.

2. The method according to claim 1, wherein the description information further comprises to-be-solved physical problem information, the system of linear equations is obtained by performing numerical simulation on the to-be-solved physical problem information, and the to-be-solved physical problem information comprises at least one of the following: a boundary condition, mesh information, and a physical equation.

3. The method according to claim 1 or 2, wherein determining the target initial solution based on the first initial solution, and iteratively solving the system of linear equations based on the target initial solution, to output the solving result of the system of linear equations comprise:

   obtaining first configuration information, wherein the first configuration information carries at least one initial solution generation manner used to generate an initial solution;
   obtaining a plurality of initial solutions in the at least one initial solution generation manner indicated by the first configuration information, wherein the plurality of initial solutions comprise the first initial solution;
   selecting the target initial solution from the plurality of initial solutions; and
   iteratively solving the system of linear equations based on the target initial solution, to output the solving result of the system of linear equations.

4. The method according to claim 3, wherein selecting the target initial solution from the plurality of initial solutions comprises:

   obtaining second configuration information, wherein the second configuration information carries at least one heuristic policy; and
   selecting the target initial solution from the plurality of initial solutions according to the at least one heuristic policy.

5. The method according to claim 3 or 4, wherein selecting the target initial solution from the plurality of initial solutions comprises:

   obtaining third configuration information, wherein the third configuration information carries an evaluation policy, the evaluation policy comprises an evaluation indicator, or comprises an evaluation indicator and a weight corresponding to each evaluation indicator, and the evaluation indicator comprises one or more of solving duration, solving precision, and a quantity of iterations; and
   selecting the target initial solution from the plurality of initial solutions according to the evaluation policy.

6. The method according to any one of claims 1 to 5, wherein the method further comprises:

generating training data, wherein the training data comprises a training sample and a label corresponding to the training sample, the training sample comprises the description information, and the label corresponding to the training sample is obtained based on the first initial solution; and
training the AI model based on the training data, to obtain an optimized AI model.

7. The method according to claim 6, wherein the method further comprises:

obtaining a performance indicator corresponding to the solving result, wherein the performance indicator comprises one or more of solving duration, solving precision, and a quantity of iterations; and
training the AI model based on the training data, to obtain the optimized AI model comprises:
training the AI model based on the training data and a loss function, to obtain the optimized AI model, wherein the loss function is constructed based on the performance indicator.

8. The method according to any one of claims 1 to 7, wherein the AI model is a general model or a model used to solve a partial differential equation PDE, the general model comprises a CNN or a PINN, and the model used to solve the PDE comprises DeepONet.

9. An apparatus for solving a system of linear equations, comprising an obtaining module and a processing module, wherein

the obtaining module is configured to obtain description information input by a user, wherein the description information comprises information about a system of linear equations, and the information about the system of linear equations comprises a right-hand side; and
the processing module is configured to:

perform inference on the description information by using an artificial intelligence AI model, to obtain a first initial solution corresponding to the system of linear equations; and
determine a target initial solution based on the first initial solution, and iteratively solve the system of linear equations based on the target initial solution, to output a solving result of the system of linear equations.

10. The apparatus according to claim 9, wherein the description information further comprises to-be-solved physical problem information, the system of linear equations is obtained by performing numerical simulation on the to-be-solved physical problem information, and the to-be-solved physical problem information comprises at least one of the following: a boundary condition, mesh information, and a physical equation.

11. The apparatus according to claim 9 or 10, wherein the obtaining module is configured to:

obtain first configuration information, wherein the first configuration information carries at least one initial solution generation manner used to generate an initial solution; and
the processing module is configured to:

obtain a plurality of initial solutions in the at least one initial solution generation manner indicated by the first configuration information, wherein the plurality of initial solutions comprise the first initial solution;
select the target initial solution from the plurality of initial solutions; and
iteratively solve the system of linear equations based on the target initial solution, to output the solving result of the system of linear equations.

12. The apparatus according to claim 11, wherein

the obtaining module is configured to obtain second configuration information, wherein the second configuration information carries at least one heuristic policy; and
the processing module is configured to select the target initial solution from the plurality of initial solutions according to the at least one heuristic policy.

13. The apparatus according to claim 11 or 12, wherein

the obtaining module is configured to obtain third configuration information, wherein the third configuration information carries an evaluation policy, the evaluation policy comprises an evaluation indicator, or comprises an evaluation indicator and a weight corresponding to each evaluation indicator, and the evaluation indicator comprises one or more of solving duration, solving precision, and a quantity of iterations; and
the processing module is configured to select the target initial solution from the plurality of initial solutions according to the evaluation policy.

**14.** The apparatus according to any one of claims 9 to 13, wherein the apparatus further comprises a training module, wherein
the training module is configured to:

generate training data, wherein the training data comprises a training sample and a label corresponding to the training sample, the training sample comprises the description information, and the label corresponding to the training sample is obtained based on the first initial solution; and
train the AI model based on the training data, to obtain an optimized AI model.

**15.** The apparatus according to claim 14, wherein

the obtaining module is configured to obtain a performance indicator corresponding to the solving result, wherein the performance indicator comprises one or more of solving duration, solving precision, and a quantity of iterations; and
the processing module is configured to train the AI model based on the training data and a loss function, to obtain the optimized AI model, wherein the loss function is constructed based on the performance indicator.

**16.** The apparatus according to any one of claims 9 to 15, wherein the AI model is a general model or a model used to solve a partial differential equation PDE, the general model comprises a CNN or a PINN, and the model used to solve the PDE comprises DeepONet.

**17.** A computing device, comprising:

at least one storage, configured to store a program; and
at least one processor, configured to execute the program stored in the storage, wherein
when the program stored in the storage is executed, the processor is configured to perform the method according to any one of claims 1 to 8.

**18.** A computing device cluster, comprising at least one computing device, wherein each computing device comprises a processor and a storage; and
the processor of the at least one computing device is configured to execute instructions stored in the storage of the at least one computing device, to cause the computing device cluster to perform the method according to any one of claims 1 to 8.

**19.** A computer-readable storage medium, wherein the computer-readable storage medium stores a computer program, and when the computer program is run on a processor, the processor is caused to perform the method according to any one of claims 1 to 8.

**20.** A computer program product, wherein the computer program product comprises instructions, and when the instructions are run on a processor, the processor is caused to perform the method according to any one of claims 1 to 8.

**Schematic flowchart of CAE simulation**

| Structure | Fluid | Explicit dynamics | Low-frequency electromagnetic | High-frequency electromagnetic | Optics | Multi-field coupling, target optimization, and the like |
|---|---|---|---|---|---|---|

Geometric preparation

Import or create a computer model

Model cleanup

Handle chamfers, remove pores, and the like

Mesh division

Perform mesh division, check mesh quality, and perform adjustment

Simulation setting

Set materials, a load condition, contact, and the like

Calculation and solution

Submit simulation calculation and support large-scale parallel computing

Simulation post-processing

Locate design defects, for improvement analysis

Design iteration

Compile a simulation report to guide update of a solution

---

**Schematic flowchart of structural mechanics simulation**

| CAD modeling | Geometric pre-processing | Boundary condition setting | Mesh division | Physical solver | System of equations solving | Numerical solution transformation |
|---|---|---|---|---|---|---|

CAD modeling: Load, Constraint

Geometric pre-processing:
- Remove threads and slits
- Perform dimension reduction processing on slices
- ...

Boundary condition setting:
- Set materials, a domain equation, a boundary condition, a load, and an initial condition

Boundary condition

Mesh division: Initial mesh division; Adaptive mesh division

Mesh information

Physical solver: Physical equation

System of linear equations
- Linear iteration method

Numerical solution transformation: Calculate a three-dimensional drawing and a cross-sectional view (for example, a x-y plot) of a modeling field, and calculate a derived value, for example, perform integral calculation on a volume, a surface, or an edge, or calculate a value of an expression at the edge or a point

FIG. 1

FIG. 2

FIG. 3

```
┌─────────────────────────────────────────────────────────────┐
│                                                               │──── 401
│        Obtain description information input by a user          │
│                                                               │
└─────────────────────────────────────────────────────────────┘
                              │
                              ▼
┌─────────────────────────────────────────────────────────────┐
│  Perform inference on the description information by using an  │──── 402
│  artificial intelligence AI model, to obtain a first initial  │
│   solution corresponding to a system of linear equations      │
└─────────────────────────────────────────────────────────────┘
                              │
                              ▼
┌─────────────────────────────────────────────────────────────┐
│  Determine a target initial solution based on the first       │──── 403
│  initial solution, and iteratively solve the system of linear │
│  equations based on the target initial solution, to output a  │
│  solving result of the system of linear equations             │
└─────────────────────────────────────────────────────────────┘
```

FIG. 4

Description information → Linear iterative solver → Solving result

Initial solution generation service of a system of linear equations

Initial solution adaptive optimization module

Initial solution candidate set
- First initial solution
- Default initial solution
- Fischer initial solution
- POD initial solution
- ⋮

At least one heuristic policy → Plurality of second initial solutions → Evaluation policy → Target initial solution

First configuration information

Second configuration information

Third configuration information

FIG. 5

EP 4 718 288 A1

FIG. 6

User

Configuration
Information

Simulation
result

Cloud
management
platform

CAE simulation service

Numerical
calculation request

Calculation result

Numerical calculation solver service

...

Linear iteration
method

...

Description
information

Calculation
result

Initial solution generation
service of a system of linear
equations

Target initial
solution

Linear iterative solver
service

Description
information

Target initial
solution

Solving result

Initial solution
adaptive optimization
module

Target initial
solution

Calculation
result

First initial
solution

Numerical calculation
platform

Initial solution generation
module

Inference
request

First initial
solution

Calculation
request

Calculation
result

AI model service

High-performance
computing base

FIG. 7

Core iron   Valve cover

Yoke

Coil

Plunger   Flange

FIG. 8

90

Apparatus for a system of linear equations

901          902          903

| Obtaining module | Processing module | Training module |

FIG. 9

100

Computing device

108          104

| Communication interface |          | Processor |

Bus
102

| Storage | 106

FIG. 10

FIG. 11

FIG. 12

| INTERNATIONA/ | International application No. |
|---|---|
| | **PCT/CN2024/079225** |

**A.      CLASSIFICATION OF SUBJECT MATTER**

    G06F 17/12(2006.01)i

According to International Patent Classification (IPC) or to both national classification and IPC

**B.      FIELDS SEARCHED**

Minimum documentation searched (classification system followed by classification symbols)

    IPC: G06F17/-

Documentation searched other than minimum documentation to the extent that such documents are included in the fields searched

Electronic data base consulted during the international search (name of data base and, where practicable, search terms used)

    CNABS; CNTXT; CNKI; DWPI; VEN; USTXT; WOTXT; EPTXT; IEEE; 百度, BAIDU: 线性, 方程, 迭代, 机器学习, 人工
    智能, 模型, 神经网络, 推理, 初值, 初始解, linear, equation, iteration, machine learning, artificial intelligence, model, neural
    network, inference, initial value, initial solution

**C.      DOCUMENTS CONSIDERED TO BE RELEVANT**

| Category* | Citation of document, with indication, where appropriate, of the relevant passages | Relevant to claim No. |
|---|---|---|
| X | US 2022309128 A1 (FUJITSU LTD.) 29 September 2022 (2022-09-29) <br> description, paragraphs 3-5 and 36-263, and figures 1-27 | 1-20 |
| X | WO 2023275370 A1 (TALOS INNOVATION APS) 05 January 2023 (2023-01-05) <br> description, page 21, line 25-page 50, line 20, and figures 1-5 | 1-20 |
| A | CN 114154110 A (XI'AN ZHONGRUI CHUANGLIAN TECHNOLOGY CO., LTD.) 08 <br> March 2022 (2022-03-08) <br> entire document | 1-20 |
| A | CN 112949239 A (LIANG WENYI) 11 June 2021 (2021-06-11) <br> entire document | 1-20 |
| A | CN 116090260 A (HARBIN ENGINEERING UNIVERSITY) 09 May 2023 (2023-05-09) <br> entire document | 1-20 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **27 May 2024** | **30 May 2024** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

| International application No. |
| --- |
| **PCT/CN2024/079225** |

| Patent document cited in search report | | | Publication date (day/month/year) | Patent family member(s) | | | Publication date (day/month/year) |
| --- | --- | --- | --- | --- | --- | --- | --- |
| US | 2022309128 | A1 | 29 September 2022 | EP | 4064035 | A1 | 28 September 2022 |
|  |  |  |  | JP | 2022147008 | A | 06 October 2022 |
| WO | 2023275370 | A1 | 05 January 2023 | CA | 3224217 | A1 | 05 January 2023 |
|  |  |  |  | GB | 202109513 | D0 | 18 August 2021 |
|  |  |  |  | GB | 2608425 | A | 04 January 2023 |
|  |  |  |  | EP | 4363694 | A1 | 08 May 2024 |
| CN | 114154110 | A | 08 March 2022 | None | | | |
| CN | 112949239 | A | 11 June 2021 | CN | 112949239 | B | 21 July 2023 |
| CN | 116090260 | A | 09 May 2023 | None | | | |

Form PCT/ISA/210 (patent family annex) (July 2022)

**REFERENCES CITED IN THE DESCRIPTION**

**Patent documents cited in the description**

- CN 202310752934X
- CN 202311253313